# EUROPÄISCHE PATENTSCHRIFT

(11) **EP 2 515 046 B1**
(45) Veröffentlichungstag und Bekanntmachung des Hinweises auf die Patenterteilung: **31.01.2018**
(21) Anmeldenummer: 12450014.1
(22) Anmeldetag: 05.03.2012
(51) Int. Cl.: F24D 19/00, F24F 1/00, F28D 1/02

(54) **Heizkörper mit Ventilatoreinheiten**
Heater with ventilator units
Radiateur doté d'unités de ventilateur

(30) Priorität: 08.03.2011 AT 3132011
(43) Veröffentlichungstag der Anmeldung: 24.10.2012
(73) Patentinhaber: Rettig Austria GmbH, 8661 Wartberg im Mürztal (AT)
(72) Erfinder: Doppelreiter, Peter, 8665 Langenwang (AT); Königshofer, Siegfried, 8680 Mürzzuschlag (AT); Springer, Arnold, 8665 Langenwang (AT)
(74) Vertreter: Wildhack & Jellinek

(56) Entgegenhaltungen:
- EP-A1- 0 940 638
- WO-A1-2007/067082
- WO-A1-2009/014478
- DE-U1- 20 216 099
- DE-U1-202010 011 282

## Beschreibung

Die Erfindung betrifft einen Heiz-Kühlkörper gemäß dem Oberbegriff des Patentanspruches 1.

Heizkörper mit Ventilatoreinheiten sind bekannt. Derartige Heizkörper sind oftmals mit Konvektionsblechen ausgestattet. Bei derartigen Heizkörpern soll mit Ventilatoren eine Leistungserhöhung auch bei tiefen Betriebsmitteltemperaturen erzielt werden, um die Heizkörper auch für regenerative Energiequellen effizient einsetzen zu können.

Wenn die Erfindung anhand von Heizkörpern beschrieben wird, so versteht es sich, dass derartige Heizkörper auch als Kühlkörper zu Kühlzwecken eingesetzt werden können. Unter dem Begriff Heizkörper sind somit auch Kühlkörper zu verstehen, die nichts anderes darstellen als Heizkörper, bei denen die Betriebsmitteltemperatur entsprechend tief eingestellt ist. Erfindungsgemäß kann somit auch die Kühlleistung von Heizkörpern verbessert werden.

Erfindungsgemäße Heizkörper können zumindest eine Heizplatte oder eine Anzahl von einander gegenüberliegend angeordneten Heizplatten umfassen. Bei mehrlagigen Heizkörpern sind die einzelnen Heizplatten parallel zueinander angeordnet und durch Leitungs- oder Ventilgarnituren verbunden. Es ist möglich, bei mehrlagigen Heizkörpern an den einander gegenüberliegenden Flächen der Heizplatten Konvektorbleche vorzusehen.

Unter einer Heizplatte wird ein eigenständiges Heizkörperelement bzw. ein Heizkörper verstanden, das bzw. der einen beliebig gestalteten, von der prinzipiellen Grundgestalt her plattenförmigen Aufbau zeigt. Eine derartige Heizplatte kann beispielsweise einen oben- und untenliegenden Sammelkanal aufweisen, welche Sammelkanäle durch Fluidkanäle verbunden sind. Eine derartige Heizplatte kann jedoch auch an ihren Außenseiten ebene Heizflächen besitzen, die beispielsweise dadurch erreicht werden, dass auf einem Sammelkanäle und Fluidkanäle aufweisenden Heizkörper Abdeckplatten befestigt werden. Eine derartige Heizplatte kann auch dadurch erstellt werden, dass eine Anzahl von plattenförmig ausgestalteten Heizkanälen direkt nebeneinander angeordnet wird, und fluidleitend verbunden wird, womit ein plattenförmiger Heizkörper erstellt wird. Eine erfindungsgemäß eingesetzte Heizplatte besitzt in der Regel rechteckförmige oder quadratische Form.

Konvektionsbleche können von einer Seitenkante zur anderen Seitenkante einer Heizplatte durchgehend angeordnet sein. Die Konvektionsbleche können auch unterbrochen ausgebildet sein bzw. abschnittsweise vorliegen. Über die Höhe einer Heizplatte können auch mehrere Reihen von Konvektionsblechen angeordnet sein, die entsprechend beabstandet sind. In Gebrauchslage sind derartige Heizkörper bzw. sind die Heizplatten mit ihrer Unter- und Oberkante parallel zum Untergrund, das heißt horizontal, angeordnet; die Seitenkanten verlaufen vertikal. Derartige Heizkörper werden in der Regel von unten nach oben, das heißt in vertikaler Richtung mit Luft durchströmt und die Luft strömt über die Plattenflächen und/oder über die Flächen der Konvektionsbleche. Dokument DE 202 16 099 U1 zeigt einen Heizkörper, der den Oberbegriff des Anspruchs 1 offenbart. Es ist nun Aufgabe der Erfindung, eine einfache und betriebssichere Montage von Ventilatoreinheiten zu gewährleisten. Die Montage und eine allfällige Demontage der Ventilatoreinheiten im Servicefall soll rasch ohne großen Aufwand erfolgen können.

Diese Aufgabe wird erfindungsgemäß mit den im Kennzeichen des Patentanspruches 1 angeführten Merkmalen gelöst.

Abgesehen von einer einfachen und raschen Montage und Demontage der Ventilatoreinheiten wird eine Position für die Ventilatoreinheiten vorgegeben, in der diese bestmöglich vor Beschädigungen im Betrieb des Heizkörpers geschützt sind, da sich der Träger für die Ventilatoreinheiten auf einem Höhenniveau befindet, das vor der Heizfläche der Heizplatte liegt und der Träger die Heizplatte nicht nach unten oder seitlich vorsteht. Sofern die Ventilatoreinheiten zwischen zwei Heizplatten angeordnet werden, sind die Ventilatoreinheiten vollständig geschützt und es ergibt sich auch ein ästhetischer Anblick, da die Ventilatoreinheiten nicht sichtbar und abgedeckt angeordnet sind. Sofern der Träger an einem von einer einzigen Heizplatte gebildeten Heizkörper befestigt wird, so erfolgt dies in der Regel an der in der Betriebslage wandseitigen Fläche des Heizkörpers. Die Montage und die Demontage der Ventilatoreinheiten sind jedoch mittels der elastisch biegbaren Verbindungseinheiten in einfacher Weise zur Seite oder nach unten hin möglich, auch wenn die Heizkörper sich in Nischen befinden.

Erfindungsgemäß kann vorgesehen sein, dass der Träger zumindest einen Profilstab und/oder eine Profilleiste und/oder eine Tragplatte und/oder eine Schiene umfasst und/oder dass die Ventilatoreinheiten und/oder die Verbindungseinheiten auf den Träger auf- und/oder einschiebbar sind. Die Form der Träger kann vielfältig sein. Vorteilhafterweise besitzen die Träger jedoch eine einfache Querschnittsform, um die Ventilatoreinheiten mittels der Verbindungseinheiten oder auch direkt auf die Träger aufschieben und aufklemmen zu können oder in einander gegenüberliegende Teile der Träger einschieben zu können oder auf Träger aufschieben oder auflegen zu können.

Es ist möglich, dass der Träger an der ein Konvektorblech tragenden Fläche der Heizplatte oder bei einem Heizkörper mit zwei einander gegenüberliegenden Heizplatten an einer oder an den beiden einander gegenüberliegenden Flächen dieser Heizplatten oder an dem von einer Heizplatte getragenen Konvektionsblech oder an den von einander gegenüberliegenden Heizplatten getragenen Konvektionsblechen befestigt ist. Diese Art der Befestigung ist ohne größeren Aufwand zu bewerkstelligen und kann werkseits oder auch vor Ort vorgenommen werden. Die Träger können zwischen zwei Heizplatten eingeklemmt werden oder an den Heizplatten vorgesehenen Laschen bzw. Vorsprüngen aufgehängt werden. Auch andere Möglichkeiten der Befestigungen der Träger an den Flächen der Heizplatten und/oder Konvektorblechen sind denkbar.

Es ist möglich, dass die einzelnen nebeneinanderliegenden Ventilatoreinheiten mit einzelnen Verbindungseinheiten miteinander verbunden sind oder dass eine durchgehende Verbindungseinheit vorgesehen ist, an der die einzelnen Ventilatoreinheiten in vorgegebenen Abständen befestigt sind. Es ist auch möglich, die einzelnen Ventilatoreinheiten auf Verbindungselementen zu befestigen und diese Verbindungselemente mit dazwischenliegenden Verbindungselementen zu einer Kette zu verbinden. Je nach Anzahl der vorgesehenen Ventilatoreinheiten und der Länge des Heizkörpers kann es von Vorteil sein, eine durchgehende Verbindungseinheit zu wählen oder die Ventilatoreinheiten mit einzelnen Verbindungseinheiten zu verbinden. Es ist dabei möglich, dass die einzelnen Verbindungseinheiten gleich lang ausgebildet und damit die Ventilatoreinheiten in gleichen Abständen längs des Trägers angeordnet sind oder dass die Ventilatoreinheiten in gleichen Abständen längs der durchgehenden Verbindungseinheit angeordnet sind. Es wird damit erreicht, dass die Abstände der Ventilatoreinheiten durch die Länge der einzelnen Verbindungseinheiten und/oder durch die Lage der Ventilatoreinheiten auf einer durchgehenden Verbindungseinheit vorgegeben werden kann.

Da die Verbindungseinheiten biegbar sind, können die Ventilatoreinheiten mit den Verbindungseinheiten seitlich aus dem Heizkörper herausbewegt werden, auch wenn seitlich des Trägers bzw. des Heizkörpers nur wenig Platz vorhanden ist. Auch eine Abnahme der Ventilatoreinheiten nach unten von einem waagrecht angeordneten Träger ist einfach möglich, da die biegbaren Verbindungseinheiten es ermöglichen, die Ventilatoreinheiten von dem Träger abzuziehen und diese sofort in eine andere Höhenlage in Bezug auf den Träger zu verbringen.

Von Vorteil ist es, wenn die einzelnen Verbindungseinheiten oder die durchgehende Verbindungseinheit zumindestens in einer Ebene elastisch biegbar sind, die parallel zur Fläche der jeweiligen Heizplatte oder parallel zur Strömungsrichtung der Ventilatoreinheiten liegt. Es ist damit möglich, den Träger an Stellen anzuordnen, an denen die Ventilatoreinheiten den besten Wirkungsgrad hervorrufen, ohne jedoch dabei berücksichtigen zu müssen, dass die Ventilatoreinheiten montiert und allenfalls auch demontiert werden müssen und ohne dabei auf räumliche Gegebenheiten achten zu müssen, wie dies beispielsweise bei in Fensternischen angeordneten Heizkörpern der Fall ist.

Ein guter Wirkungsgrad ergibt sich, wenn der Träger unterhalb eines auf der mit Luft zu beaufschlagenden Fläche der Heizplatte befindlichen oder befestigten Konvektionsbleches angeordnet oder befestigt ist, und/oder wenn der Strömungsbereich der Ventilatoreinheiten die einander gegenüberliegenden Flächen von zwei einander gegenüberliegend angeordneten Heizplatten bestreicht oder die mit Konvektionsblechen versehenen Flächen von einander gegenüberliegenden Heizplatten oder die mit einem Konvektionsblech versehene Fläche einer Heizplatte bestreicht.

Es kann von Vorteil sein, wenn die einzelnen Verbindungseinheiten zug- und/oder drucksteif ausgebildet sind, und/oder wenn die durchgehende Verbindungseinheit oder die einzelnen Verbindungseinheiten von band- oder plattenförmig ausgebildeten Bauteilen gebildet sind, die gegebenenfalls den Raum zwischen zwei einander gegenüberliegend angeordneten Heizplatten nur teilweise ausfüllen und/oder mit Luftdurchtrittsöffnungen versehen sind. Für eine Montage der Ventilatoreinheiten ist es von Vorteil, wenn die Verbindungseinheit bzw. die einzelnen Verbindungseinheiten drucksteif ausgebildet sind, da damit die mittels der einzelnen Verbindungseinheiten bzw. der durchgehenden Verbindungseinheit verbundenen Ventilatoreinheiten auch auf einen Träger auf- bzw. in einen Träger eingeschoben werden können. Die Demontage ist einfach möglich, indem die Verbindungseinheiten herausgezogen und damit vom Träger entfernt bzw. abgezogen werden.

Des Weiteren sollen jedoch derartige Verbindungseinheiten die Luftströmung über die Höhe einer Heizplatte bzw. zwischen Heizplatten nicht beinträchtigen, weshalb vorgesehen ist, dass die Verbindungselemente lediglich einen geringen Raum zwischen Heizplatten oder vor einer Heizplatte einnehmen und/oder mit Luftdurchtrittsöffnungen versehen sind. Damit wird eine Beeinträchtigung der Luftzirkulation durch die Verbindungseinheiten vermieden.

Es ist auch möglich, dass die Ventilatoreinheiten mit den Verbindungseinheiten lösbar verbindbar sind. Damit wird die Ausbildung von unterschiedlich langen Ventilatoreinheit-Ketten einfach möglich.

Es erweist sich von Vorteil, wenn zur Verbindung der Verbindungseinheiten mit den Ventilatoreinheiten und/oder zur Verbindung der Verbindungseinheiten und/oder der Ventilatoreinheiten mit dem jeweiligen Träger an den Verbindungseinheiten und/oder an den Ventilatoreinheiten Verbindungselemente und/oder Vorsprünge, Bolzen, Aufnahmen, Vertiefungen und/oder Klemmeinrichtungen ausgebildet oder angeordnet sind. Damit ist es einfach möglich, schadhafte Ventilatoreinheiten oder schadhafte Verbindungseinheiten aus einer Kette von in Abstand angeordneten und miteinander mittels der Verbindungselemente verbundenen Ventilatoreinheiten auszutauschen. Die Art und Weise der Verbindung ist vielfältig ausführbar.

Da die Ventilatoreinheiten elektrisch betrieben sind, ist es von Vorteil, wenn an den Verbindungseinheiten und/oder den Ventilatoreinheiten Kabelträger oder Kabelhalter angeordnet oder ausgebildet sind.

Die Verbindungseinheiten können band- oder streifenförmig ausgebildet sein. Es ist zweckmäßig, wenn die Breite einer Verbindungseinheit, senkrecht zu der jeweiligen Fläche der Heizplatte, der Breite oder dem Durchmesser der Ventilatoreinheiten entspricht oder diese unterschreitet. Es ist auch vorteilhaft, wenn die einzelnen Verbindungseinheiten in Draufsicht gesehen rechteckförmig ausgebildet sind und zumindest eine, vorzugsweise mittig liegende, Luftdurchtrittsausnehmung aufweisen.

Die Verbindungseinheiten können in großen Stückzahlen bzw. in Serie erstellt werden und einfach mit Ventilatoreinheiten verbunden werden und beeinträchtigen die Luftzirkulation in ausgesprochen geringem Maß.

Es ist ferner vorgesehen, dass die Ventilatoreinheiten und/oder die durchgehende Verbindungseinheit oder die einzelnen Verbindungseinheiten von einer Schmalseite der Heizplatten her auf den Träger aufschiebbar oder einschiebbar sind und/oder dass die Enden des Trägers von zumindest einer Schmalseite der Heizplatten für das Einschieben oder Aufschieben von Ventilatoreinheiten zugänglich ist. Die Montage und Demontage wird damit vereinfacht. Die Ventilatoreinheiten können auch unten her bzw. vom unteren Längsseitenbereich des Heizkörpers her bzw. von unten her zwischen gegenüberliegende Heizplatten eingeschoben oder ausgebaut werden.

Es kann vorgesehen sein, dass die Ventilatoreinheiten Luft durch Saugen oder Blasen über die Fläche der jeweiligen Heizplatte oder die Flächen einander gegenüberliegender Heizplatten fördern. In beiden Fällen ist der Einsatz von Verbindungseinheiten für die Montage und Demontage der Ventilatoreinheiten von Vorteil.

Bei einer möglichen Ausführungsform kann vorgesehen sein, dass die Ventilatoreinheiten auf einer als Trägerplatte ausgebildeten Verbindungseinheit befestigt ist und diese Trägerplatte mit weiteren einzelnen Verbindungseinheiten verbunden und mit von ihr getragenen Befestigungseinheiten auf den Träger aufschiebbar oder einschiebbar ist. Die Trägplatte erleichtert die Verbindung und die Halterung der Ventilatoreinheiten.

Vorteilhaft ist es, wenn die zwischen den Ventilatoreinheiten liegenden Verbindungseinheiten kürzer ausgebildet sind als die die Ventilatoreinheiten tragenden Verbindungseinheiten. Damit kann die Anzahl der Ventilatoreinheiten längs des Trägers erhöht werden. Derartige Verbindungseinheiten wind mit Luftdurchtrittsöffnungen versehen oder verengen oder verlegen den Spalt zwischen gegenüberliegenden Heizplatten nur in einem geringen Ausmaß. Es ist auch möglich, die Ventilatoreinheiten und/oder die Verbindungseinheiten auf den Träger, vorzugsweise von unten, aufzuklemmen und durch Verschieben auf dem Träger in die gewünschte Lage zu verbringen. Diese Vorgangsweise ist vor allem bei im unteren Randbereich des Heizkörpers angeordneten Trägern vorteilhaft.

Im Folgenden wird die Erfindung anhand der Zeichnung beispielsweise näher erläutert. Fig. 1a bis 1f zeigen Beispiele für die Montage und Demontage von Ventilatoreinheiten an Trägern, die an Heizplatten befestigt sind. Fig. 2a, 2b und 2c sowie 3a, 3d und 3c zeigen die Befestigung von Ventilatoreinheiten mittels einer Trägerplatte an einem Träger, der zwischen zwei Heizplatten angeordnet ist. Fig. 4, 5 und 6 zeigen unterschiedliche Ausführungsformen von Trägern und von Verbindungselementen, die auf den Träger aufschiebbar oder einschiebbar sind. Fig. 7 zeigt eine Ausführungsform einer Verbindungseinheit, die auf einen Träger aufklemmbar ist, wobei der Träger an den Konvektionsblechen von zwei Heizplatten befestigt ist. Fig. 8a, 8b und 8c zeigen die Montage von Ventilatoreinheiten zwischen zwei Heizplatten und zwischen übereinander liegenden Reihen von Konvektorblechen. Fig. 9a, 9b und 9c zeigen weitere Ausführungsformen eines Trägers für die Halterung von Ventilatoreinheiten.

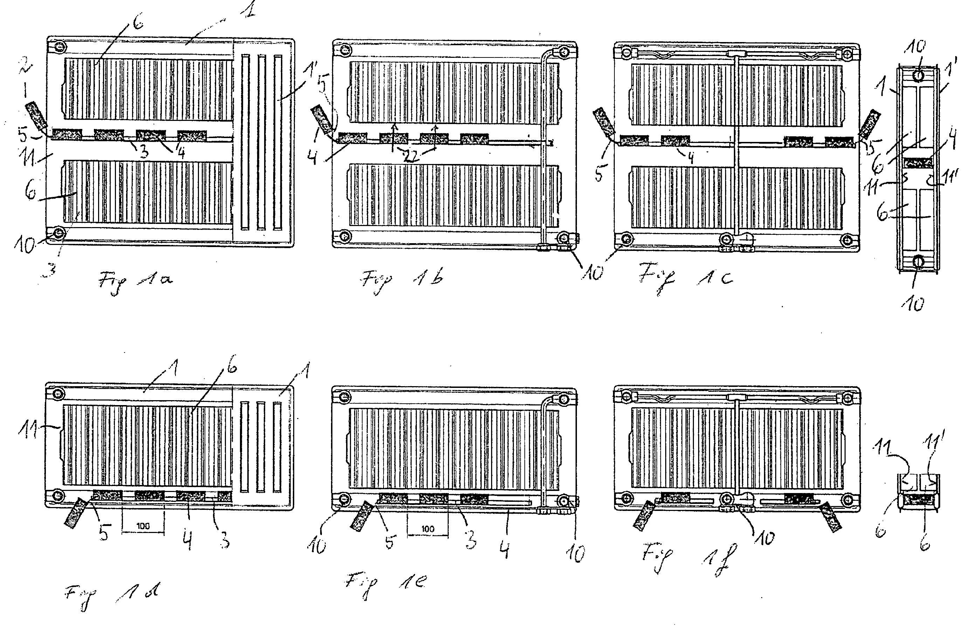

Fig. 1a, 1b und 1c zeigen eine schematische Längsschnittansicht durch einen zweilagigen Heizkörper, das heißt einen Heizkörper, der zwei Heizplatten 1, 1' umfasst, die über Ventilgarnituren 10 miteinander in Fluidverbindung stehen. Jede der beiden Heizplatten 1, 1' trägt jeweils zwei längsverlaufende Konvektorbleche 6, die übereinander im Abstand zueinander angeordnet sind. Zwischen den einander gegenüberliegenden Flächen 11, 11' der beiden Heizplatten 1, 1' liegt ein Träger 3. Dieser Träger 3 kann an den beiden Heizplatten 1, 1' oder auch nur an einer dieser beiden Heizplatten 1, 1' befestigt sein. Der Träger erstreckt sich in Längsrichtung der jeweiligen Heizplatte 1, 1' in dem Zwischenraum zwischen dem oben liegenden Konvektorblech 6 und dem unten liegenden Konvektorblech 6. Wie schematisch angedeutet, werden von dem Träger 3 Ventilatoreinheiten 4 getragen. Die Ventilatoreinheiten 4 können von einer Schmalseite her auf den Träger 3 bzw. dessen Endbereiche aufgebracht und eingeschoben werden oder auch von beiden Seiten. Durch Herausziehen aus dem Zwischenraum zwischen den beiden Heizplatten 1, 1' können die Ventilatoreinheiten 4 vom Träger 3 abgezogen bzw. aus dem Heizkörper entfernt werden. Die Ventilatoreinheiten 4 sind mittels Verbindungseinheiten 5, welche in diesen Figuren nur schematisch dargestellt sind, miteinander verbunden und können aneinander gehängt in Form einer Kette herausgezogen oder eingeschoben werden. Entsprechend wird auf die Ventilatoreinheiten 4 händisch Zug oder Druck aufgebracht. Die Ventilatoreinheiten 4, die mittels der Verbindungselemente 5 verbunden sind und aneinander hängen, können auf den Träger 3 aufgeschoben bzw. in diesen eingeschoben werden und werden von diesem getragen. Sie können dabei auch durch Klemmen an dem Träger 3 befestigt werden. Die Ventilatoreinheiten 4 dienen dazu, Luft entsprechend der Strömungsrichtung 22, wie diese in Fig. 1b dargestellt ist, über die Innenflächen 11, 11' der beiden Heizplatten 1, 1' zu fördern, um die Zirkulation und Wärmeabfuhr des Heizkörpers zu verbessern.

Fig. 1d, 1e und 1f zeigen die Anordnung eines Trägers 3 bzw. von zwei Trägern 3 vor den Flächen 11, 11' der Heizplatten 1, 1'. Man erkennt, dass der bzw. die Träger 3 im Abstand vor den seitlich oder mittig an den beiden Heizplatten 11, 11' angeordneten Ventilgarnituren 10 endet. Gemäß Fig. 1f enden die beiden Träger 3 vor der mittig gelegenen Ventilgarnitur 10.

Um ein Aufschieben bzw. eine Entnahme der mit den Verbindungseinheiten 5 verbundenen Ventilatoreinheiten 4 auf den bzw. vom Träger 3 zu ermöglichen, sind die Verbindungseinheiten 5 elastisch biegbar ausgeführt.

Prinzipiell können die Verbindungseinheiten 5 aus einem Material bestehen, das zwar biegbar und zugfest, jedoch nicht druckfest ist. Wird ein nicht druckfestes Material, z.B. ein geflochtenes Band, verwendet, so ist es erforderlich, die Ventilatoreneinheiten 4, die auf den Träger 3 aufgesetzt werden sollen, derart einzuführen, dass auf die erste oder jeweilig vorangehend eingeschobene Ventilatoreinheit 4 oder die jeweilige Verbindungseinheit Zug in Richtung des Inneren des Heizkörpers ausgeübt wird und damit die nachfolgenden Ventilatoreinheit 4 auf den Träger 3 aufgezogen wird. Bei der Verwendung von drucksteifem Material können die Ventilatoreinheiten 4 und/oder die Verbindungseinheiten 5 eingeschoben werden durch Druckbelastung der jeweils außenliegenden Einheit. Entsprechend wird auf die Ventilatoreinheiten händisch Zug oder Druck aufgebracht.

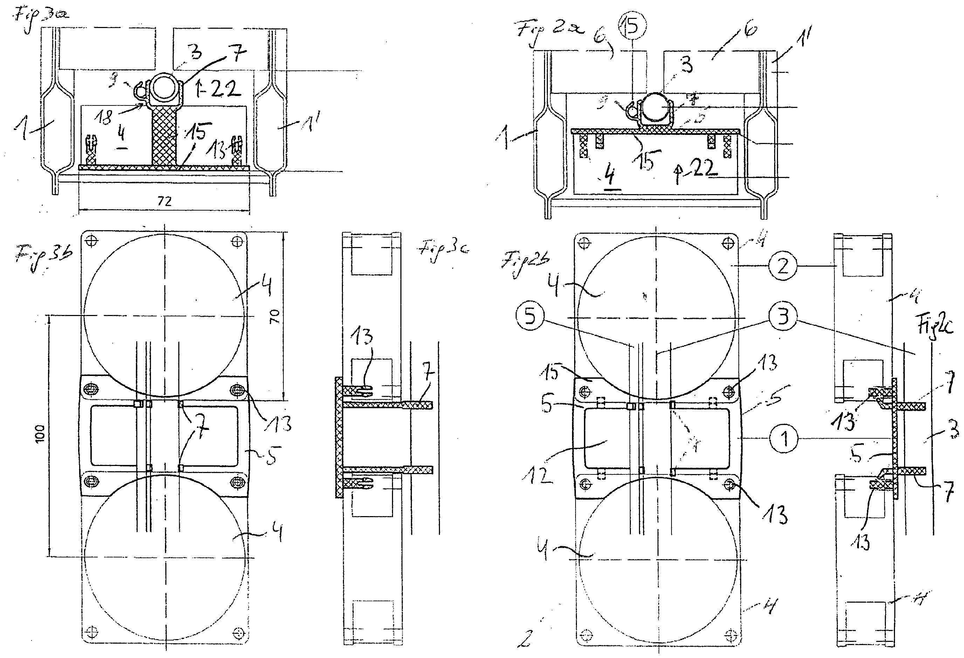

Fig. 2a, 2b und 2c zeigen im schematischen Schnitt einen zwischen zwei Heizplatten 1, 1' angeordneten Träger 3, an dem eine Verbindungseinheit 5 in Form einer Tragplatte 15 durch Aufklemmen am Träger ein- und ausschiebbar befestigt ist.

Die eine Ventilatoreinheit 4 tragende Tragplatte 15 ist vom Träger 3 abgehängt und besitzt eine Erstreckung in eine Richtung senkrecht zu den beiden Heizplatten 1, 1' derart, dass sich die Tragplatte 15 diesen Heizplatten 1, 1' relativ weit annähert. Wie jedoch in Fig. 2b ersichtlich ist, besitzt dieses Verbindungseinheit 5 zumindest eine Ausnehmung 12, um einen Luftdurchtritt durch die Verbindungseinheit 5 zu ermöglichen. Dieser Luftdurchtritt erfolgt zusätzlich zu dem von den Ventilatoreinheiten 4 hervorgerufenen Luftstrom, der in Richtung des Pfeils 22 verläuft. Die Ventilatoreinheiten 4 sind untereinander über die einzelnen Verbindungseinheiten 5 verbunden. Die Verbindungseinheiten 5 werden mit den Ventilatoreinheiten 4 über geeignete Befestigungsmittel 13 beliebiger Art verbunden. Dazu können u.a. Steckbolzen, Ausnehmungen oder Rasteinheiten usw. vorgesehen werden. Wesentlich ist, dass die Verbindungseinheiten 5 die einzelnen Ventilatoreinheiten zugfest verbinden und eine Abbiegung der zu einer Kette verbundenen Ventilatoreinheiten 4 ermöglichen, wenn diese vom Träger 3 abgezogen oder -geschoben oder auf diesen aufgeschoben oder -gezogen werden. Befestigungsmittel 13 können auch dazu dienen, die einzelnen nebeneinander liegenden Verbindungseinheiten 5, die gegebenenfalls die Form einer Tragplatte 15 aufweisen, miteinander, insbesondere lösbar, zu verbinden.

In der schematischen Seitenansicht, die in Fig. 2c dargestellt ist, erkennt man, dass die einzelnen Verbindungseinheiten 5 mittels Klemmen 7 auf den Träger 3 aufgeklemmt sind und Steckbolzen 13 tragen, die in Ausnehmungen der Ventilatoreinheiten 4 eingesetzt sind. Die Verbindungseinheiten 5 sind elastisch biegbar und vorzugsweise aus Kunststoff gefertigt.

Wie in Fig. 2a dargestellt, können die Verbindungseinheiten 5 und/oder die Ventilatoreinheiten 4 Träger bzw. Halter 9 für die Stromkabel 15 für die Ventilatoreinheiten 4 aufweisen.

Fig. 2a bis 2c zeigen eine Ausführungsform mit der kleinstmöglichen Kettenlänge einer Ventilatoreinheit-Kette mit lediglich zwei Ventilatoreinheiten 4 und einer einzigen Verbindungseinheit 5. Diese kürzeste Ventilatoreinheit-Kette kann verlängert werden durch Anschluss von Verbindungseinheiten 5 und Ventilatoreinheiten 4.

Prinzipiell ist es auch möglich, den Träger 3 mit Befestigungseinrichtungen an den Seitenkanten bzw. Seitenflächen der Heizplatten 1, 1' derart zu befestigen, dass er vor den Innenflächen 11, 11' der Heizplatten 1,1' verläuft.

Bei der Ausführungsform gemäß Fig. 3a, 3b und 3c sind die Verbindungseinheiten 5, die direkt mit den Ventilatoreinheiten 4 mittels Befestigungseinheiten 13 verbunden sind, vom Träger 3 mit Klemmen 7 aufweisenden Klemmeinheiten 18, die an den Verbindungseinheiten 5 angeordnet sind, vom Träger 3 abgehängt, wobei die Ventilatoreinheit 4 auf der Tragplatte 15 anliegt. Mittels Spreizklemmen bzw. -bolzen 13 sind die Verbindungseinheiten 5 mit den Ventilatoreinheiten 4 verbunden. Sofern die Verbindungseinheiten 5 drucksteif ausgebildet sind, ist ein Einschieben der Kette der Ventilatoreneinheiten 4 auf den Träger zwischen die Heizplatten 1, 1' auch in diesem Fall einfach möglich.

Ein Herausziehen der Kette der Ventilatoreinheiten 4, wobei die miteinander verbundenen Ventilatoreinheiten 4 längs einer Kurvenbahn bewegt werden, wird durch die elastisch biegbaren Verbindungseinheiten 5 möglich.

Es ist ersichtlich, dass anstelle von einzelnen Verbindungseinheiten 5, welche benachbarte Ventilatoreinheiten 4 verbinden, auch eine durchgehende Verbindungseinheit 5 vorgesehen sein kann, welche in vorgegebenen Abständen angeordnete Ventilatoreinheiten 4 trägt und mit diesen verbunden ist. Eine derartige Ausführungsform ist nicht dargestellt. Es ist auch möglich, die Ventilatoreinheiten 4 auf Verbindungseinheiten 5 zu befestigen.

Die Form und Gestaltung des Trägers 3 kann in weiten Grenzen variiert werden. Es ist lediglich erforderlich, dass der Träger 3 vor der Innenfläche 11, 11' der jeweiligen Heizplatte 1, 1' befestigt werden kann, sodass die Ventilatoreinheiten 4 zwischen den Heizplatten 1, 1' zu liegen kommen.

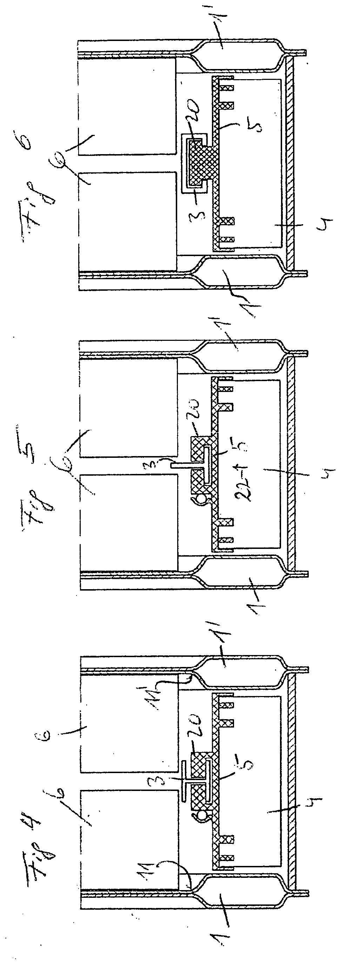

Wie aus den Fig. 4, 5 und 6 ersichtlich ist, können als Träger 3 Profilträger eingesetzt werden, beispielsweise H-Träger, T-Träger oder C-Träger, an welche Profilträger, die mit Vorsprüngen 20 und/oder Ausnehmungen versehenen Verbindungseinheiten 5 entsprechend angepasst sind.

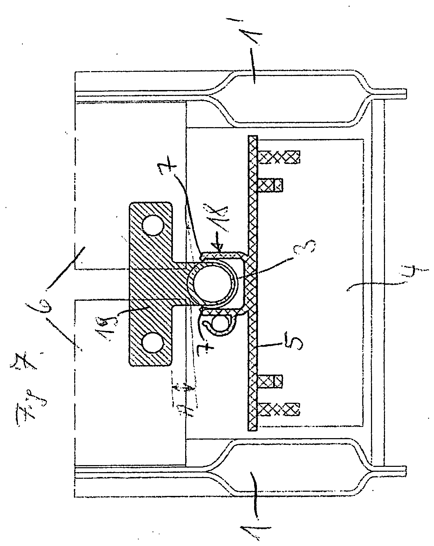

In Fig. 7 ist eine Ausführungsform der Erfindung dargestellt, bei der der Träger 3 mittels eines Flansches 19 an den Konvektorblechen 6 von zwei einander gegenüberliegendend angeordneten Heizplatten 1, 1' befestigt ist. Die Verbindungseinheit 5 mit der Ventilatoreinheit 4 ist nach unten abgehängt und mittels Klemmen 7 einer Klemmeinheit 18 am Träger 3 festgelegt.

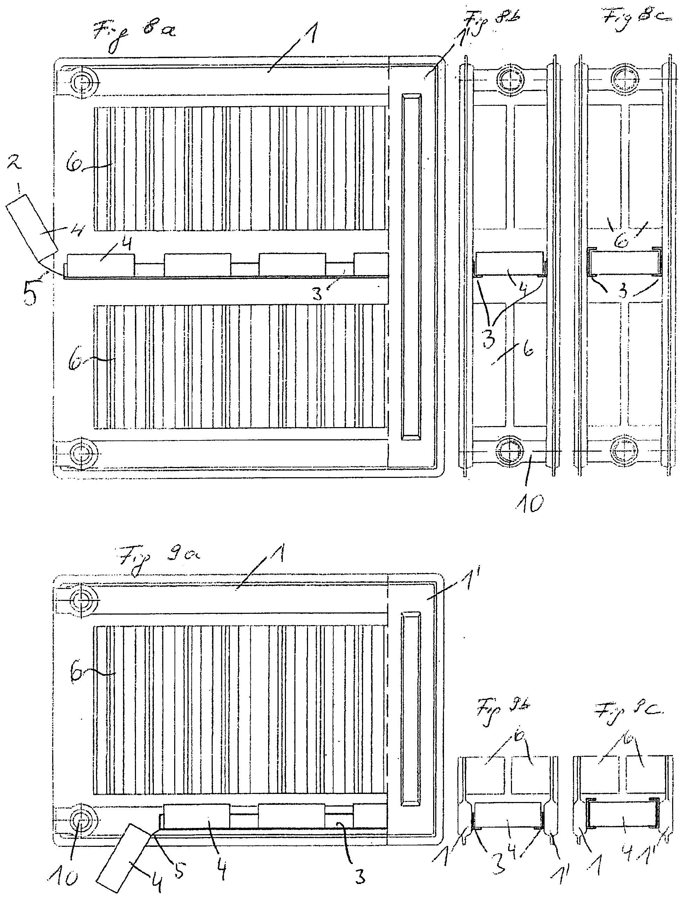

In Fig. 8a ist das "Einfädeln" bzw. das "Herausziehen" einer Kette von Ventilatoreinheiten 4 in den bzw. aus dem Zwischenraum zwischen zwei Heizplatten 1, 1' schematisch dargestellt. Man erkennt, dass beim bzw. unmittelbar nach dem Abziehen der Verbindungseinheiten 5 bzw. der Ventilatoreinheiten 4 vom Träger 3 die Kette bzw. die Verbindungseinheiten 5 einer Abbiegung unterworfen werden können, weil die Verbindungseinheiten 5 biegbar ausgeführt sind. Damit kann - wie beispielsweise in Fig. 9a dargestellt - ein "Einfädeln" der Kette der Ventilatoreinheiten 4 in den Zwischenraum zwischen Heizplatten 1, 1' durch den an sich sonst unzugänglichen Bereich zwischen zwei Ventilgarnituren 10 erfolgen, die im Bereich des unteren Sammelkanals der Heizplatten 1, 1' zur Verbindung der Sammelkanäle dieser beiden Heizplatten 1, 1' angeordnet sind.

Bei den Ausführungsformen gemäß Fig. 8a bis 8c und 9a bis 9c ist kein Klemmelement vorgesehen, mit dem die Verbindungseinheiten 5 an dem Träger 3 befestigt sind, sondern der Träger 3 trägt die Verbindungselemente 5 und die Ventilatoreinheiten 4.

Wie aus Fig. 8b und 8c bzw. 9b und 9c ersichtlich ist, wird der Träger 3 von zwei einander gegenüberliegend angeordneten Winkelprofilen bzw. C-Profilen gebildet, welche an den Heizplatten 1, 1' befestigt sind. Auf die Profile sind die Ventilatoreinheiten 4 und/oder die Verbindungseinheiten 5 ein- oder aufschiebbar bzw. auflegbar und durch Einziehen einbringbar oder durch Herausziehen demontierbar.

Die Träger 3 können an den Heizplatten 1, 1' oder an den Konvektorblechen 6 lösbar festgelegt werden, um die Träger allenfalls austauschen zu können, insbesondere wenn die Verbindungseinheiten 5 bzw. die Ventilatoreinheiten 4 durch anders dimensionierte Einheiten ersetzt werden sollen.

Es ist wichtig, dass durch den Zwischenraum zwischen den Heizplatten 1, 1' die Luft weitgehend ungehindert zirkulieren kann, um auch für den Fall, dass die Ventilatoreinheiten 4 nicht in Betrieb sind, eine gute Heizleistung zu erzielen. Es wird somit Augenmerk darauf gelegt, dass die Verbindungselemente 5 die Luftbewegung weitestgehend nicht behindern. Es ist besonders wichtig und vorteilhaft, dass eine Montage und Demontage der Ventilatoreinheiten 4 bzw. der Verbindungseinheiten 5 auch bei hydraulisch an das Fluidnetz angeschlossenen Heizkörpern möglich ist und auch dann möglich ist, wenn diese Heizkörper in einer Heizkörpernische mit relativ geringem seitlichen Abstand zur Wand montiert wurden.

Die Montage der Träger 3 kann an beliebigen Stellen der Heizplatten 1, 1' erfolgen. Vorteilhafterweise werden die Träger jedoch in Nähe bzw. unterhalb der Konvektorbleche 6 angeordnet.

Zwischen den Ventilatoreinheiten 4 wird ein Abstand eingehalten, der einen optimalen Wirkungsgrad für die Ventilatoreinheiten 4 vorgibt.

Ein Heizkörper mit nur einer Heizplatte, vor deren vorzugsweise wandseitigen Fläche ein Träger 3 verläuft, ist in den Zeichnungen nicht dargestellt.

## Patentansprüche

1. Heiz-Kühlkörper mit zumindest einer Heizplatte (1), die zumindest ein Konvektorblech (6) trägt, und mit zumindest einer Ventilatoreinheit (4), die zu erwärmende Luft von unten nach oben über zumindest einen Teilabschnitt der Heizplatte (1) fördert, **dadurch gekennzeichnet, dass** vor der Fläche (11, 11') der Heizplatte (1, 1') bzw. auf einem vor der Fläche liegenden Höhenniveau zumindest ein sich in Längsrichtung dieser Heizplatte (1, 1') und/oder sich in Gebrauchslage des Heizkörpers horizontal erstreckender Träger (3) angeordnet ist, von dem eine Mehrzahl von Ventilatoreinheiten (4) getragen ist, **dadurch gekennzeichnet, dass** die nebeneinanderliegenden Ventilatoreinheiten (4) jeweils über eine elastisch biegbare Verbindungseinheit (5) verbunden sind und die Ventilatoreinheiten (4) und/oder die Verbindungseinheiten (5) auf dem Träger (3) in dessen Längsrichtung verschiebbar gelagert sind.

2. Heizkörper nach Anspruch 1, **dadurch gekennzeichnet,**
- **dass** der Träger (3) zumindest einen Profilstab und/oder eine Profilleiste und/oder eine Tragplatte und/oder eine Schiene umfasst und/oder
- **dass** die Ventilatoreinheiten (4) und/oder die Verbindungseinheiten (5) auf den Träger (3) auf- und/oder einschiebbar und/oder auf den Träger (3) aufklemmbar sind.

3. Heizkörper nach Anspruch 1 oder 2, **dadurch gekennzeichnet, dass** der Träger (3) an der ein Konvektionsblech (6) tragenden Fläche der Heizplatte (1) oder bei einem Heizkörper mit zwei einander gegenüberliegenden Heizplatten (1, 1') an einer oder an den beiden einander gegenüberliegenden Flächen dieser Heizplatten (1, 1') oder an dem von einer Heizplatte (1, 1') getragenen Konvektionsblech (6) oder an den von einander gegenüberliegenden Heizplatten (1, 1') getragenen Konvektionsblechen (6) befestigt ist.

4. Heizkörper nach einem der Ansprüche 1 bis 3, **dadurch gekennzeichnet,**
- **dass** die einzelnen nebeneinanderliegenden Ventilatoreinheiten (4) mit einzelnen Verbindungseinheiten (5) miteinander verbunden sind oder
- **dass** eine durchgehende Verbindungseinheit (5) vorgesehen ist, an der die einzelnen Ventilatoreinheiten (4) in vorgegebenen Abständen befestigt sind.

5. Heizkörper nach Anspruch 4, **dadurch gekennzeichnet,**
- **dass** die einzelnen Verbindungseinheiten (5) gleich lang ausgebildet und damit die Ventilatoreinheiten (4) in gleichen Abständen längs des Trägers (3) angeordnet sind oder
- **dass** die Ventilatoreinheiten (4) in gleichen Abständen längs der durchgehenden Verbindungseinheit (5) angeordnet sind.

6. Heizkörper nach einem der Ansprüche 4 oder 5, **dadurch gekennzeichnet, dass** die einzelnen Verbindungseinheiten oder die durchgehende Verbindungseinheit (5) zumindestens in einer Ebene elastisch biegbar sind, die parallel zur Fläche (11, 11') der jeweiligen Heizplatte (1, 1') liegt.

7. Heizkörper nach einem der Ansprüche 1 bis 6, **dadurch gekennzeichnet,**
- **dass** der Träger (3) unterhalb eines auf der mit Luft zu beaufschlagenden Fläche (11, 11') der Heizplatte (1, 1') befindlichen oder befestigten Konvektionsbleches (6) angeordnet oder befestigt ist, und/oder
- **dass** der Strömungsbereich der Ventilatoreinheiten (4) die einander gegenüberliegenden Flächen (11, 11') von zwei einander gegenüberliegend angeordneten Heizplatten (1, 1') bestreicht oder die mit Konvektionsblechen (6) versehenen Flächen (11, 11') von einander gegenüberliegenden Heizplatten (1, 1') oder die mit einem Konvektionsblech (6) versehene Fläche (11, 11') einer Heizplatte (1, 1') bestreicht.

8. Heizkörper nach einem der Ansprüche 4 bis 7, **dadurch gekennzeichnet,**
- **dass** die einzelnen Verbindungseinheiten (5) zug- und/oder drucksteif ausgebildet sind, und/oder
- **dass** die durchgehende Verbindungseinheit oder die einzelnen Verbindungseinheiten (5) von band- oder plattenförmig ausgebildeten Bauteilen gebildet sind, die gegebenenfalls den Raum zwischen zwei einander gegenüberliegend angeordneten Heizplatten (1, 1') nur teilweise ausfüllen und/oder mit Luftdurchtrittsöffnungen (12) versehen sind.

9. Heizkörper nach einem der Ansprüche 1 bis 8, **dadurch gekennzeichnet, dass** die Ventilatoreinheiten (4) mit den Verbindungseinheiten (5) lösbar verbindbar sind.

10. Heizkörper nach einem der Ansprüche 1 bis 9, **dadurch gekennzeichnet, dass** zur Verbindung der Verbindungseinheiten (5) mit den Ventilatoreinheiten (4) und/oder zur Verbindung der Verbindungseinheiten (5) miteinander und/oder zur Verbindung der Verbindungseinheiten (5) und/oder der Ventilatoreinheiten (4) mit dem jeweiligen Träger (3) an den Verbindungseinheiten (5) und/oder an den Ventilatoreinheiten (4) Befestigungs- oder Verbindungselemente (13) und/oder Vorsprünge, Bolzen, Aufnahmen, Vertiefungen und/oder Klemmeinheiten (18) ausgebildet oder angeordnet sind.

11. Heizkörper nach einem der Ansprüche 1 bis 10, **dadurch gekennzeichnet, dass** an den Verbindungseinheiten (5) und/oder den Ventilatoreinheiten (4) Kabelträger oder Kabelhalter (9) angebracht oder ausgebildet sind.

12. Heizkörper nach einem der Ansprüche 1 bis 11, **dadurch gekennzeichnet, dass** die Breite einer Verbindungseinheit (5), senkrecht zu der jeweiligen Fläche der Heizplatte (1), der Breite oder dem Durchmesser der Ventilatoreinheiten (4) entspricht oder diese unterschreitet und/oder dass die einzelnen Verbindungseinheiten (5) in Draufsicht gesehen rechteckförmig ausgebildet sind und zumindest eine, vorzugsweise mittig liegende, Luftdurchtrittsausnehmung (12) aufweisen.

13. Heizkörper nach einem der Ansprüche 4 bis 12, **dadurch gekennzeichnet, dass** die Ventilatoreinheiten (4) und/oder die durchgehende Verbindungseinheit oder die einzelnen Verbindungseinheiten (5) von einer Schmalseite der Heizplatten (1, 1') her auf den Träger (3) aufschiebbar oder einschiebbar sind und/oder dass die Enden des Trägers (3) von zumindest einer Schmalseite der Heizplatten (11, 11') für das Einschieben oder Aufschieben von Ventilatoreinheiten (4) zugänglich ist.

14. Heizkörper nach einem der Ansprüche 1 bis 13, **dadurch gekennzeichnet, dass** die Ventilatoreinheiten (4) Luft durch Saugen oder Blasen über die Fläche (11, 11') der jeweiligen Heizplatte (1, 1') oder die Flächen (11, 11') einander gegenüberliegender Heizplatten (1, 1') fördern können.

15. Heizkörper nach einem der Ansprüche 1 bis 14, **dadurch gekennzeichnet, dass** die Ventilatoreinheiten (4) auf einer als Trägerplatte ausgebildeten Verbindungseinheit (5) befestigt ist und diese Trägerplatte (15) mit weiteren einzelnen Verbindungseinheiten (5) verbunden und mit von ihr getragenen Befestigungseinheiten (7) auf den Träger (3) aufschiebbar oder einschiebbar oder aufklemmbar ist und/oder dass die zwischen Ventilatoreinheiten (4) liegenden weiteren einzelnen Verbindungseinheiten (5) kürzer ausgebildet sind als die Ventilatoreinheiten (4) tragenden Verbindungseinheiten.

## Claims

1. The invention relates to a heater/heat sink comprising at least one heating plate (1), which carries at least one convector sheet (6), and comprising at least one ventilator unit (4), which conveys air to be heated from below upwards over at least one subsection of the heating plate (1), **characterised in that** at least one carrier (3) extending horizontally in the longitudinal direction of said heating plate (1, 1') and/or in the position of use of the heating body is arranged in front of the surface (11, 11') of the heating plate (1, 1') or at a height level lying in front of the surface, said carrier carrying a plurality of ventilator units (4), **characterised in that** the adjacent ventilator units (4) are each connected via an elastically flexible connecting unit (5) and the ventilator units (4) and/or the connecting units (5) are mounted on the carrier (3) so as to be displaceable in the longitudinal direction thereof.

2. The heater according to claim 1, **characterised in that**
- the carrier (3) comprises at least one profiled bar and/or a profiled strip and/or a carrier plate and/or a rail, and/or
- that the ventilator units (4) and/or the connecting units (5) can be pushed onto and/or inserted onto the carrier (3) and/or can be clamped onto the carrier (3).

3. The heater according to claim 1 or 2, **characterised in that** the carrier (3) is fastened to the surface of the heating plate (1) which carries a convection sheet (6) or, in the case of a heater comprising two mutually facing heating plates (1, 1'), to a or to the two mutually facing surfaces of said heating plates (1, 1') or to the convection sheet (6) carried by a heating plate (1, 1') or to the convection sheets (6) carried by the mutually facing heating plates (1, 1').

4. The heater according to any one of claims 1 to 3, **characterised in that**
- the individual adjacent ventilator units (4) are connected to one another by means of individual connecting units (5) or
- that a continuous connecting unit (5) is provided, to which the individual ventilator units (4) are fastened at predetermined distances.

5. The heater according to claim 4, **characterised in**
- **that** the individual connecting units (5) are designed of equal length and thus the ventilator units (4) are arranged at equal distances along the carrier (3), or
- **that** the ventilator units (4) are arranged at equal distances along the continuous connecting unit (5).

6. The heater according to any one of claims 4 or 5, **characterised in that** the individual connecting units or the continuous connecting unit (5) can be elastically bent at least in a plane which lies parallel to the surface (11, 11') of the respective heating plate (1, 1').

7. The heater according to any one of claims 1 to 6, **characterised in**
- **that** the carrier (3) is arranged or fastened below a convection sheet (6) which is disposed or fastened on the surface (11, 11'), to which air is to be applied, of the heating plate (1, 1'), and/or
- **that** the flow region of the ventilator units (4) spreads over the mutually facing surfaces (11, 11') of two heating plates (1, 1') arranged facing one another or the surfaces (11, 11') provided with convection sheets (6) of mutually facing heating plates (1, 1') or spreads over the surface (11, 11') of a heating plate (1, 1') which is provided with a convection sheet (6).

8. The heater according to any one of claims 4 to 7, **characterised in**
- **that** the individual connecting units (5) are designed in a tension-resistant and compression-resistant manner, and/or
- **that** the continuous connecting unit or the individual connecting units (5) are formed from strip-like or plate-like components, which only partially fill the space between the two heating plates (1, 1') arranged facing one another and/or are provided with air passage openings (12).

9. The heater according to any one of claims 1 to 8, **characterised in that** the ventilator units (4) can be detachably connected to the connecting units (5).

10. The heater according to any one of claims 1 to 9, **characterised in that** for connecting the connecting units (5) with the ventilator units (4) and/or for connecting the connecting units (5) to one another and/or for connecting the connecting units (5) and/or the ventilator units (4) to the respective carrier (3), fastening elements or connecting elements (13) and/or projections, bolts, receptacles, depressions and/or clamping units (18) are configured or arranged on the connecting units (5) and/or on the ventilator units (4).

11. The heater according to any one of claims 1 to 10, **characterised in that** cable carriers or cable holders (9) are attached or configured on the connecting units (5) and/or the ventilator units (4).

12. The heater according to any one of claims 1 to 11, **characterised in that** the width of a connecting unit (5), perpendicular to the respective surface of the heating plate (1), corresponds to the width or the diameter of the ventilator units (4) or is less than same, and/or that the individual connecting units (5) are configured rectangular in plan view and have at least one, preferably centrally disposed, air passage recess (12).

13. The heater according to any one of claims 4 to 12, **characterised in that** the ventilator units (4) and/or the continuous connecting unit or the individual connecting units (5) can be pushed onto or inserted onto the carrier (3) from a narrow side of the heating plates (1, 1'), and/or that the ends of the carrier (3) are accessible from at least one narrow side of the heating plates (11, 11') for inserting or pushing on ventilator units (4).

14. The heater according to one of claims 1 to 13, **characterised in that** the ventilator units (4) can convey air by sucking or blowing over the surface (11, 11') of the respective heating plate (1, 1') or the surfaces (11, 11') of mutually facing heating plates (1, 1').

15. The heater according to any one of claims 1 to 14, **characterised in that** the ventilator units (4) are fastened on a connecting unit (5) configured as a carrier plate, and said carrier plate (15) is connected to further individual connecting units (5) and by means of fastening units (7) carried by said carrier plate can be pushed onto or inserted onto or clamped onto the carrier (3), and/or that the further individual connecting units (5) disposed between the ventilator units (4) are configured shorter than the connecting units carrying the ventilator units (4).

## Revendications

1. Corps de chauffage et refroidissement comprenant au moins une plaque de chauffage (1), qui porte au moins une tôle de convecteur (6) et comprenant au moins une unité de ventilateur (4), qui guide l'air à chauffer de bas en haut au-dessus d'au moins une section partielle de la plaque de chauffage (1), **caractérisé en ce que**, devant la surface (11, 11') de la plaque de chauffage (1, 1') ou à un niveau de hauteur se trouvant devant la surface, au moins un support (3) s'étendant dans le sens longitudinal de cette plaque de chauffage (1, 1') et/ou au plan horizontal en état de service du corps de chauffe, support portant une pluralité d'unités de ventilateur (4), **caractérisé en ce que** les unités de ventilateurs (4) juxtaposées sont respectivement reliées par le biais d'une unité de liaison (5) flexible de manière élastique et les unités de ventilateur (4) et/ou les unités de liaison (5) sont situées de manière à pouvoir se déplacer sur le support (3) dans son sens longitudinal.

2. Radiateur selon la revendication 1, **caractérisé en ce**
- **que** le support (3) comprend au moins une barre profilée et/ou une bande profilée et/ou une plaque de support et/ou une glissière et/ou
- en ce que les unités de ventilateur (4) et/ou les unités de liaison (5) peuvent être glissées sur le support (3) et/ou insérées dans le support (3) et/ou encliquetées sur celui-ci.

3. Radiateur selon la revendication 1 ou 2, **caractérisé en ce que** le support (3) est fixé sur une surface portant la tôle de convection (6) de la plaque de chauffage (1) ou lorsque le radiateur comprend deux plaques de chauffage (1, 1') opposées sur une ou sur les deux surfaces opposées de ces plaques de chauffage (1, 1') ou sur la tôle de convection (6) portée par une plaque de chauffage (1, 1') ou sur les tôles de convection (6) portées par les plaques de chauffage (1, 1') opposées.

4. Radiateur selon une des revendications 1 à 3, **caractérisé en ce**
- **que** les unités de ventilateur (4) juxtaposées individuelles sont reliées avec les unités de liaison (5) individuelles ou
- en ce qu'une unité de liaison (5) continue est prévue, sur laquelle les unités de ventilateur (4) individuelles sont fixées à intervalles prédéfinis.

5. Radiateur selon la revendication 4, **caractérisé en ce**
- **que** les unités de liaison (5) individuelles sont formées de même longueur et, ainsi, les unités de ventilateur (4) sont disposées à intervalles identiques le long du support (3) ou
- en ce que les unités de ventilateur (4) sont disposées à intervalles identiques le long de l'unité de liaison (5) continue.

6. Radiateur selon une des revendications 4 ou 5, **caractérisé en ce que** les unités de liaison individuelles ou l'unité de liaison continue (5) sont flexibles de manière élastique dans au moins un plan, qui repose parallèle à la surface (11, 11') de la plaque de chauffage (1, 1') respective.

7. Radiateur selon une des revendications 1 à 6, **caractérisé en ce**
- **que** le support (3) est disposé ou fixé au-dessous d'une tôle de convection (6) se trouvant ou étant fixée sur la surface (11, 11') sur laquelle l'air doit être incident de la plaque de chauffage (1, 1') et/ou
- en ce que la zone d'écoulement des unités de ventilateur (4) balaie les surfaces (11, 11') opposées de deux plaques de chauffage (1, 1') disposées l'une en face de l'autre ou balaie les surfaces (11, 11') pourvues des tôles de convection (6) des plaques de chauffage (1, 1') opposées ou la surface (11, 11') pourvue d'une tôle de convection (11, 11') d'une plaque de chauffage (1, 1').

8. Radiateur selon une des revendications 4 à 7, **caractérisé en ce**
- **que** les unités de liaison (5) individuelles sont formées souples en traction et/ou en pression et/ou
- en ce que l'unité de liaison continue ou les unités de liaison individuelles (5) sont formées par des composants conçus en forme de bande ou de plaque, qui ne remplissent le cas échéant l'espace entre deux plaques de chauffage (1, 1') opposées que partiellement et/ou qui sont pourvus d'ouvertures de passage d'air (12).

9. Radiateur selon une des revendications 1 à 8, **caractérisé en ce que** les unités de ventilateur (4) peuvent être reliées de façon détachable aux unités de liaison (5).

10. Radiateur selon une des revendications 1 à 9, **caractérisé en ce que**, pour la liaison des unités de liaison (5) avec les unités de ventilateur (4) et/ou pour la liaison des unités de liaison (5) les unes avec les autres et/ou pour la liaison des unités de liaison (5) et/ou des unités de ventilateur (4) avec le support (3) respectif, des éléments de fixation ou de liaison (13) et/ou des saillies, des boulons, des évidements, des renfoncements et/ou des unités de serrage (18) sont formés ou disposés sur les unités de liaison (5) et/ou sur les unités de ventilateur (4).

11. Radiateur selon une des revendications 1 à 10, **caractérisé en ce que** des supports de câble ou des porte-câbles (9) sont appliqués ou formés sur les unités de liaison (5) et/ou les unités de ventilateur (4).

12. Radiateur selon une des revendications 1 à 11, **caractérisé en ce que** la largeur d'une unité de liaison (5), perpendiculairement à la surface respective de la plaque de chauffage (1), correspond ou est inférieure à la largeur ou au diamètre des unités de ventilateur (4) et/ou **en ce que** les unités de liaison (5) individuelles, observées sur une vue de dessus, sont formées rectangulaires et présentent au moins un orifice de passage d'air (12), se situant de préférence au milieu.

13. Radiateur selon une des revendications 4 à 12, **caractérisé en ce que** les unités de ventilateur (4) et/ou l'unité de liaison continue ou les unités de liaison (5) individuelles peuvent être glissées sur et/ou insérées dans le support (3) depuis un côté étroit des plaques de chauffage (1, 1') et/ou **en ce que** les extrémités de support (3) sont accessibles, au moins depuis un côté étroit des plaques de chauffage (11, 11') pour l'insertion ou le glissement des unités de ventilateur (4).

14. Radiateur selon une des revendications 1 à 13, **caractérisé en ce que** les unités de ventilateur (4) peuvent guider l'air par aspiration ou soufflage au-dessus de la surface (11, 11') de la plaque de chauffage (1, 1') respectives ou des surfaces (11, 11') des plaques de chauffage (1, 1') opposées.

15. Radiateur selon une des revendications 1 à 14, **caractérisé en ce que** les unités de ventilateur (4) sont fixées sur une unité de liaison (5) formée comme une plaque de support et cette plaque de support (15) est reliée à d'autres unités de liaison (5) individuelles et peut être glissée sur ou insérée dans ou serrée sur le support (3) avec des unités de fixation (7) qu'elle porte et/ou **en ce que** les autres unités de liaison (5) individuelles se trouvant entre les unités de ventilateur (4) sont formées plus courtes que les unités de liaison portant les unités de ventilateur (4).
